# EUROPEAN PATENT SPECIFICATION

(11) **EP 1 274 558 B1**
(45) Date of publication and mention of the grant of the patent: **20.07.2005**
(21) Application number: 00965206.6
(22) Date of filing: 20.09.2000
(51) Int. Cl.: B29C 53/80, B65H 81/00, D04H 3/07, D04H 3/04, D04H 3/12, D06H 7/08, B63H 9/06, B29C 70/30, B29C 70/50, B32B 27/12

(54) **APPARATUS AND METHOD FOR MANUFACTURING A NON-WOVEN COMPOSITE FABRIC**
VORRICHTUNG UND VERFAHREN ZUR HERSTELLUNG EINES VERBUNDVLIESMATERIALS
DISPOSITIF ET PROCEDE DE FABRICATION D'UN TEXTILE COMPOSITE NON TISSE

(30) Priority: 20.09.1999 US 154717 P
(43) Date of publication of application: 15.01.2003
(73) Proprietor: HUNTER DOUGLAS INC., Upper Saddle River, NJ 07458-0740 (US)
(72) Inventor: COLSON, Wendell, B., Weston, MA 02493 (US); SWISZCZ, Paul, G., Boulder Co. 80304 (US)
(74) Representative: Smith, Samuel Leonard
(86) International application number: PCT/US2000/025793
(87) International publication number: WO 2001/021383

(56) References cited:
- EP-A- 0 885 803
- WO-A-00/41523
- WO-A-80/02850
- US-A- 2 797 728
- US-A- 3 591 434
- US-A- 3 663 331
- US-A- 4 265 691
- US-A- 4 411 722
- US-A- 4 511 424
- US-A- 5 061 545
- US-A- 5 097 783

## Description

### FIELD OF THE INVENTION

The present invention relates to an apparatus according to the preamble of claim 1 and a corresponding method for manufacturing non-woven fabric materials and, more particularly, a composite fabric which includes at least two non-woven fabric layers; a first non-woven layer having yarns aligned in the machine direction; and a second non-woven layer having yarns aligned substantially perpendicular to the machine direction.

Such an apparatus is known eg from US-A-4 511 424.

### SUMMARY OF THE INVENTION

In the present invention, two non-woven yarn substrates are combined into a composite structure, which, after lamination, preferably pressure lamination, has a variety of uses. In particular, either before, or after lamination, the composite fabric has the general appearance of a woven fabric.

Reference to the term yarn will be made throughout the description of the invention and the term should be broadly interpreted to include mono and multi-filament yarns and strands of material. The yarns may be large or small in diameter or denier, and can be made from many types of materials including but not limited to polyester, polyethylene, polypropylene, polyaramid and other polymers or plastics; wool, cotton, hemp and other natural fibers; blends of natural and/or synthetic fibers; glass, metal, graphite and the like. It is conceivable that some of the warp and/or weft yarns may be copper or aluminum wire. It should also be appreciated with the description that follows that various densities of warp or weft yarn wrap will be referenced and these densities will vary depending upon the type of yarn as described above and the desired characteristics of the non-woven product being manufactured.

The object of the present invention is to improve the overall performance of the product, in particular by improving the accuracy of the weft yarn placement and the strength of the bond of the yarns.

Accordingly, this invention provides an apparatus according to claim 1 and a method according to claim 15 for manufacturing a non-woven fabric product having substantially perpendicular warp yarns and weft yarns.

The non-woven fabric has the appearance of a woven fabric, but is considered a non-woven because the warp and weft yarns are not interlaced or interwoven, but instead are laid one over the other and adhered together.

The composite fabric may involve the use of warp yarns and weft yarns positioned substantially perpendicular to one another. The terms "substantially perpendicular" as used herein are meant to include angles that approximate 90 degrees, and include specifically a range of from about 85 to 95 degrees, preferably 87 to 93 degrees, more preferably 89 to 91 degrees and most preferably 89.5 to 90.5 degrees.

The two different yarns are adhered to one another with an adhesive material that is first set during the initial processing, and may be further set during pressure lamination. The yarn density can approach as high as 55 yarns per cm (140 yarns per inch) for a single strand 36 cotton count yarn. This is substantially higher than the density available in the same yarn count of a conventional woven fabric, which has a maximum yarn density of about 35 yarns per cm (90 yarns per inch) for the same yarn. The adhesive preferably represents less than 5-20% by weight of the entire structure.

The apparatus of the present invention includes a supply station for warp yarn material. For the purposes of this disclosure, warp yarn material will be any material or combination of yarns that has yarns or fibers primarily positioned to run in the machine direction of the apparatus and that are, at a minimum, coated with a thin coating of adhesive material. The apparatus further includes a warp yarn material delivery station where the warp yarn material is conformed longitudinally to the outer surface of a cylindrical support so as to extend longitudinally of the support, and a weft yarn application station through which the warp material passes. Once the composite fabric material (combined warp and weft yarns) has been formed, an adhesive situated between the non-woven fabric layers is heated and cooled to bond the layers. The bonded composite fabric material may be treated with high pressure and heat to make a more secure bond. However, this final pressure-bonding step is not mandatory, but it does increase the strength characteristics of the final composite product.

In the present invention, the weft yarn application station comprises an enclosed rotating drum that has a ring-like enclosure with a plurality of supplies of weft yarn material on separate individual spools, cones or the like. The drum has a cylindrical axial passage along its longitudinal axis through which the warp yarns with the overlying adhesive pass. The cylindrical axial passage is fitted with a conical aligner, which serves as the final guide for guiding the rotating weft yarns into position on the warp yarns in substantially perpendicular alignment. The conical aligner is a stationary unit, which has an angled or sloped surface directed toward the forward movement of the warp yarns. A slope ranging from about 30 to 60 degrees has been found to be effective, with a 45-degree slope being preferred.

Each of the weft yarns are delivered to a fixed point on the stationary conical aligner, and from that point each yarn falls down the slope of the aligner and finally falls into place on the cylindrical warp fabric yarns, landing on the adhesive on the exposed surface of the warp yarns. By use of the conical aligner of the present invention, the weft yarns do not overlap one another. Instead, the weft yarns bump one another down the aligner and onto the warp fabric, creating a tight packing of the individual fibers laid transversely around the adhesive and warp yarns as the drum rotates at about 500-600 rpm about its axis. Tension of the weft yarns is provided by the centrifugal rotation of the drum.

It will be appreciated that both the tensioning of the weft yarns and the conical aligner's guiding of the placement of the weft yarns at the surface of the warp yarn material, in conjunction with the rotation of the weft yarns around the warp yarn material results in very high accuracy of weft yarn placement. High accuracy of the yarn placement can result in high weft yarn packing density, uniformity of the weft yam, structural engineering of the fabric based on known placement of the weft yarns, and overall improved performance of the product.

In a preferred embodiment of the apparatus, up to twelve spools of weft yarn material can be mounted within the rotating drum on a radial wall thereof even though the size of the drum can be increased or the density of the spools within the drum can be increased so as to allow for more or less than twelve spools. By providing twelve spools of material at a pre-determined equal circumferential spacing within the drum, the drum can be properly balanced so that it can be rotated at high rates of speed substantially without vibration. It is also important that the twelve spools, or however many are used, are at an exactly equal angular displacement relative to each other, for a uniform spacing of weft yarns. Exact angular displacement and the pushing of the weft yarns against the next adjacent weft yarn results in the weft yarns being precisely and controllably placed so as to optimize weft yarn packing. However, if a pattern is desired, this equal displacement could be modified.

The drum also has a separate power source for rotating the drum at a different speed than the power source at the take-up station in the apparatus, which advances the transfer belt and the warp yarn material through the apparatus. Accordingly, the warp yarn material can be moved linearly through the apparatus along the cylindrical support at a selected or varied rate of speed while the rate of rotation of the drum can be at an independent selected and variable speed. This allows the weft yarns to be wrapped around the warp yarn material at predetermined or desired spacing and also at an angle relative to the longitudinal axis of the warp yarn material. In other words, while the weft yarn material is wrapped substantially perpendicularly to the warp yarn material, in reality it is slightly offset from perpendicular and the angle of offset can be varied by varying the rate of rotation of the drum relative to the linear speed at which the warp yarn material is advanced through the drum. As the angle is varied, so is the average spacing of the weft yarns.

### BRIEF DESCRIPTION OF THE DRAWINGS

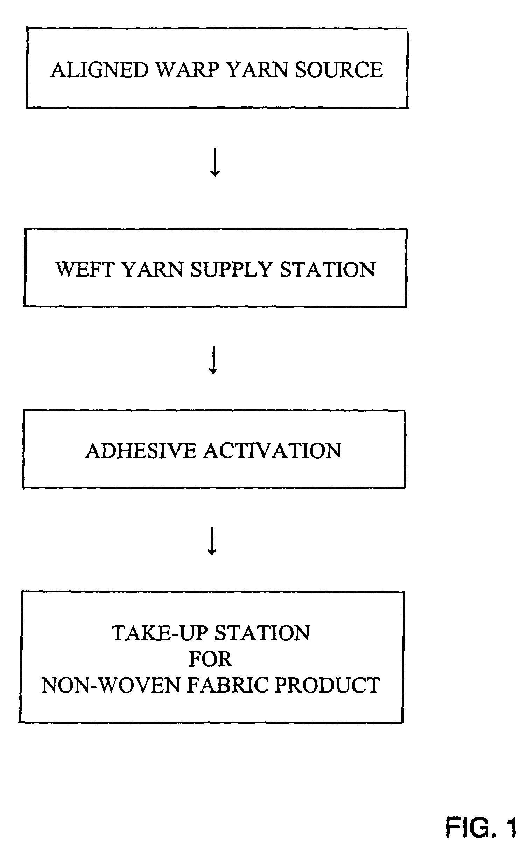

Fig. 1 is a flow-chart depicting the process of the present invention in which a source of aligned warp yarns is combined with a source of weft yarns and then an adhesive which binds the two yarn sources together is activated (heating and cooling) and thereafter a combined non-woven fabric product is collected at a take-up station. This material is useful "as is" or it may be further processed as described below.
Fig. 2 is a diagrammatic side elevation of a preferred embodiment of the manufacturing apparatus of the present invention.
Fig. 3 is a fragmentary diagrammatic top elevation of the apparatus shown in Fig. 2 with the adhesive removed for clarity.
Fig. 4 is a fragmentary diagrammatic side elevation of the apparatus shown in Fig. 2.
Fig. 5 is an enlarged fragmentary section taken along line 8-8 of Fig. 4.
Fig. 6 is an enlarged fragmentary section taken along line 7-7 of Fig. 4.
Fig. 7 is an enlarged fragmentary section taken along line 10-10 of Fig. 6.
Fig. 8 is an enlarged fragmentary section taken along line 11-11 of Fig. 4 and having been rotate ninety degrees.
Fig. 9 is a side cutaway of the conical aligner showing how the weft yarns are delivered to the warp yarn surface in a tightly packed arrangement.
Fig. 10 is a perspective view showing the weft yarns being applied at wide spacing to the warp yarn cylinder, showing how the weft yarns slide down the conical aligner face to drop precisely down on the warp yarn material.

### DETAILED DESCRIPTION OF THE PREFERRED EMBODIMENTS

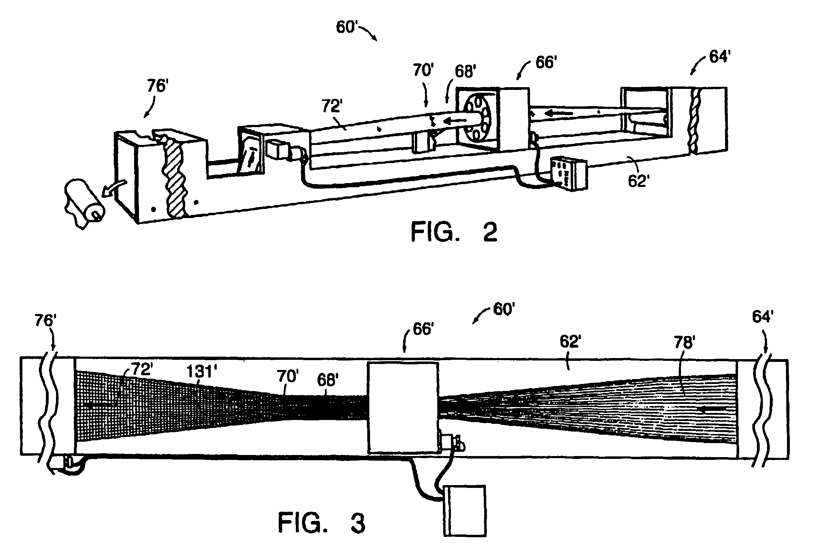

The non-woven fabric manufacturing apparatus 60' of the present invention is shown in Fig. 2 to include an elongated in-line framework 62' including a warp yarn material supply station 64', a weft yarn application station 66' a heating station 68', a cooling station 70', a flattening station 72', and a take-up station 76'. From the take-up station, the composite non-woven fabric can either be used directly, for instance as a light filtering medium, or it can be pressure laminated into a high strength composite fabric, suitable for use under extreme conditions, e.g., as sail cloth fabric.

PCT Publication No. WO 00/41523 describes a non-woven warp yarn fabric material, which is one preferred layer of the composite fabric in the present invention. In general, this aspect of the PCT publication describes a preferred warp yarn material for use in the present invention. The substrate comprises a plurality of yarns that are formed into an aligned group, substantially parallel and equally spaced apart, and held together by a hot melt adhesive applied to one side of the fiber group. This fiber orientation, in which the fibers run in the machine direction, creates a non-woven fabric material substrate in which the fibers mimic warp yarns, which can be combined with one or more woven or non-woven fiber substrates and pressure laminated to create finished products that have superior strength characteristics but retain the visual impression and physical feel of a woven material.

PCT Publication No. WO 00/41523 also describes a pressure laminator for finalizing the processing of the composite material of the present invention. In general, this aspect of the PCT publication describes a dual belt driven, continuous pressure lamination apparatus that utilizes pressure, heat and cooling to bond at least two substrates (plies) with an adhesive between the layers of the substrates. This pressure laminator has been specifically designed to permit the permanent joining of at least two non-woven fabric substrates with an adhesive between the substrates, with little or no shrinkage occurring during the lamination process. The resulting non-woven fabric advantageously has the appearance of a woven fabric, but has superior strength characteristics there over.

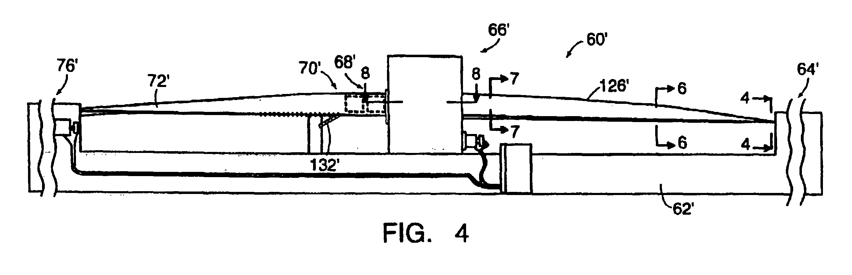

As illustrated in Figs. 2 and 4, a warp yarn material support system 62' includes a warp yarn material supply station 64'. The warp yarn material 78' is provided on a supply roll 80' at the warp yarn material supply station 64'. Once in place at the supply station 64' of the apparatus of the present invention the warp yarn material 78' is passed on an endless, recycling transfer belt, preferably of PTFE (Teflon®). A series of bars and folding points (not shown) convert the flat sheet of warp yarn material into a curved or cylindrical shape. This folding box equipment is known in the art, and once the warp yarn material has the general shape of a cylinder, with the adhesive layer on the outside or exposed surface, the warp yarns are ready to be over wrapped with the weft yarn material.

Once formed into a cylindrical shape, the warp yarn material is advanced through the weft yarn application station 66' at a pre-determined rate with the warp yarn adhesive coating positioned on the exterior surface of the cylindrically configured warp yarn material. As the warp yarn material passes through the weft yarn application station, a series of weft yarns radially located on a rotating drum 130' an equal distance from one another are wrapped transversely around the cylindrically configured warp yarn material at a predetermined rate and the resultant composite structure of warp yarn material 78', adhesive coating and weft yarns is then advanced through the heating station 68' where the adhesive coating is melted so that the adhesive will bond the warp yarn material and the weft yarns.

Immediately thereafter the composite material passes through the cooling or adhesive setting station 70' where the adhesive is set so as to no longer be tacky. The bonded fabric composite 131' progresses from the cooling station to the take-up station 76', a cutter 132', preferably a rotary cutter, longitudinally severs the cylindrical composite fabric material and the cut composite fabric material progressively changes from its cylindrical orientation, back to a generally flat orientation in the flattening station 72'. At the downstream end of the flattening station, the belt passes down and around a drive roller that underlies the endless belt, where the belt is returned to the supply station 64 via tensioning roller and idler rollers. The drive roller, through its driving engagement with the endless belt, thereby advances the warp yarn material through the apparatus.

Fig. 3 is another diagrammatic view looking down on the apparatus shown in Fig. 2. This view illustrates the longitudinal, or machine direction orientation of the warp yarn material as it enters the weft yarn application station 66' and the resultant non-woven composite fabric product 131' extending from the weft yarn application station toward the take-up station 76'.

The supply of warp yarn material 78' is disposed on a transfer roll at the supply station and the yarns or fibers in the material 78' extend in parallel side-by-side relationship. A suitable braking or friction system (not seen) prevents the roll from rotating freely and thus overrunning. The material is passed over an idler roller onto the driven, endless recycling PTFE (Teflon®) belt that supports the warp yarn material and advances it through the weft yarn application station. The PTFE (Teflon®) belt conforms to the support structure 126' and slides over a stainless steel wear plate.

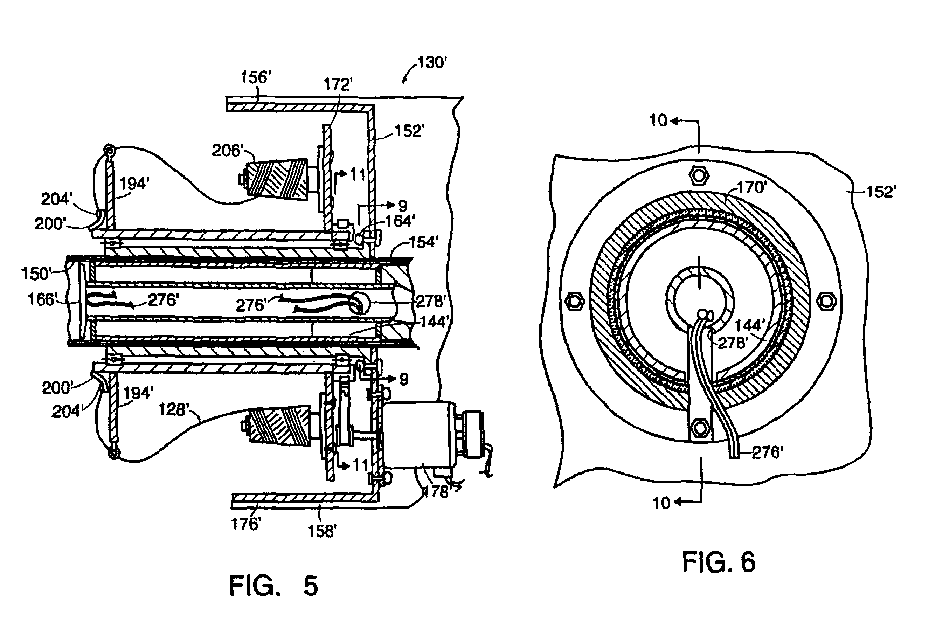

As seen in Fig. 5, at the weft yarn application station 66', the PTFE (Teflon®) belting continues through the weft yarn application station and is supported by a rigid inner cylindrical ring 144' that extends substantially the full length of the weft yarn application station.

Fig. 5 illustrates the weft yarn application station 66', which includes an outer housing 146' having a rear or downstream wall 152' having an aligned circular opening 154' there through, a top wall 156', a bottom wall 158', and side walls 160'. A rigid support ring 162' having a peripheral flange 164' at its upstream end is bolted or otherwise secured to the rear wall 152' of the housing and defines a cylindrical passage 166' through the weft yarn application station. An inner cylindrical surface of the support ring is circumferentially spaced from the belting as it extends through the weft yarn application station. The support ring carries at longitudinally spaced locations on its outer surface the inner races of large diameter thin section ball bearings 168' such as of the type provided by Kaydon Corp. of Sumter, South Carolina. Outer races of the ball bearings respectively support another cylindrical body 170' that forms the inner cylindrical wall of the rotating drum. The inner cylindrical wall of the rotating drum supports a front radial wall 172' at the upstream end of the drum and radial wheel 194' at the downstream end of the drum, and the radial walls support an outer cylindrical wall 176' of the drum. The radial wheel 194' has guideposts 195' on the outer edges for delivering the weft yarns to the warp ring. The innermost portion of the radial wheel terminates at the conical aligner 200, which has a radiused, curved or sloped surface. The conical aligner 200 guides the weft yarns into a substantially perpendicular alignment with the warp yarns.

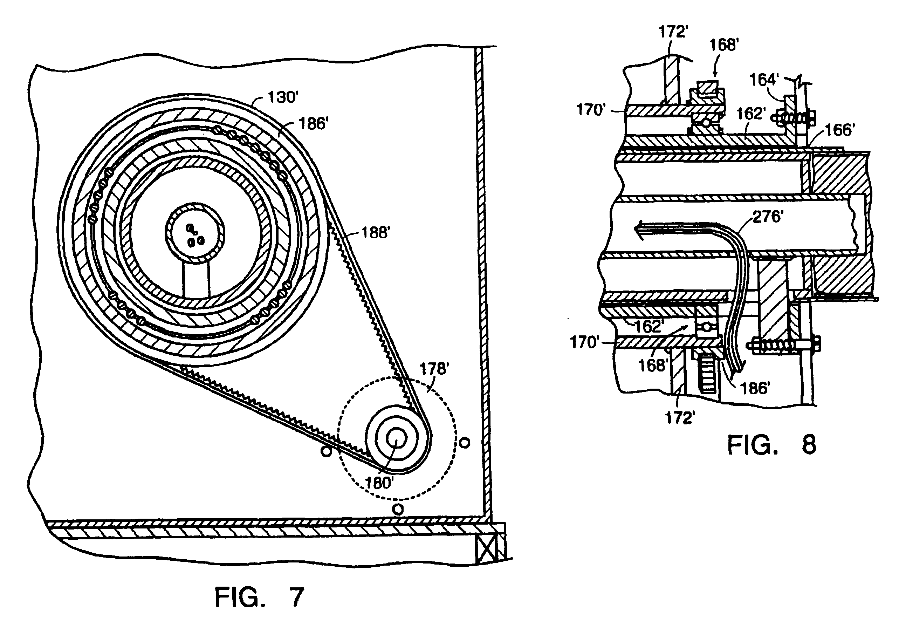

As shown in Fig. 7, a variable speed electric motor 178', serving as power means for the weft yarn application station, is mounted on the upstream face of the front wall 148' of the housing and has a drive shaft 180' that extends into the interior of the housing and supports a drive pulley 182' that is aligned with one of the ball bearings 168'. The inner cylindrical wall 170' supports a pulley 186' around which a drive belt 188' extends so as to operably interconnect the drum with the drive pulley 182' of the electric motor. Energization of the electric motor thereby rotates the drum at variably selected speeds. The details of the mounting of the ball bearing and drive belt is probably best seen in the enlarged view in Fig. 7.

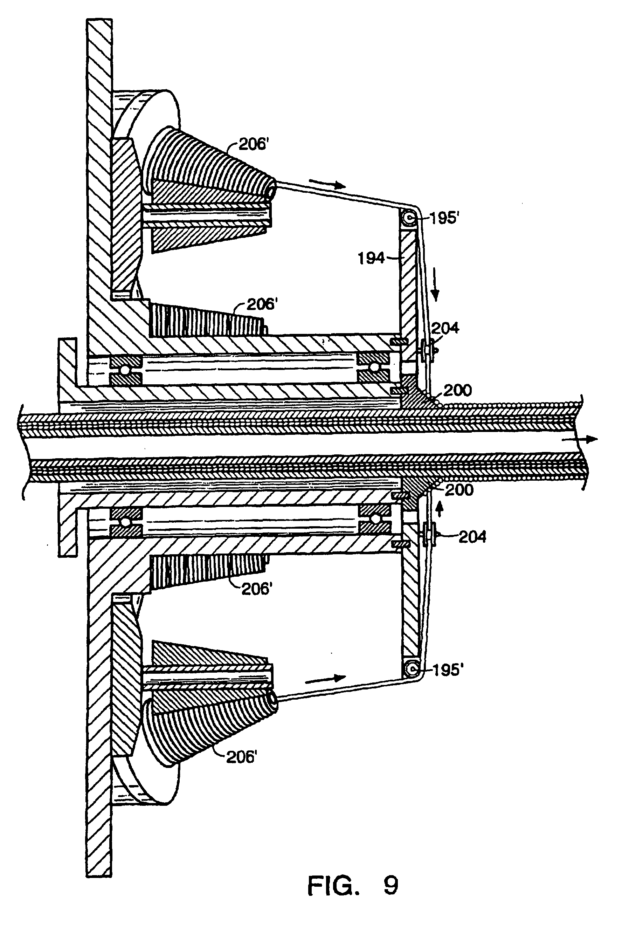

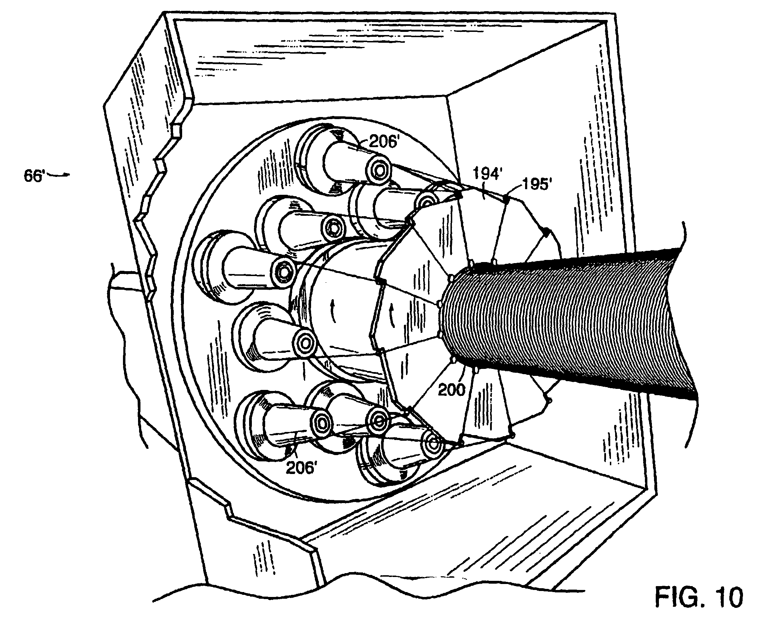

A plurality of source supplies of weft yarn material are provided in the form of spools 206' of such material and are removably mounted on the inner surface of the front wall 172 of the rotating drum, again in circumferentially spaced relationship and alignment with the circular openings in the rear wall of the drum. It should be appreciated that the number of spools of weft yarn material could vary and while the disclosed embodiment shows six such spools, more or less could be used, in a preferred embodiment, twelve such spools are used. The weft yarn material is extended from a spool 206' to the eyelet 195' on disk 194 and then passed radially inwardly down the face of disk 194 to another eyelet 204 at the base of disk 194. This is best seen in Figs. 9 and 10.

As the weft yarn application drum rotates, the weft yarns are delivered through eyelet 204 on disk 194, and the yarns slip down the curved slope of the conical aligner 200, by which each yarn is delivered to the warp in a substantially perpendicular alignment. Fig. 9 best illustrates the conical aligner of the present invention. As shown therein, the conical aligner 200 is a stationary device, with a surface angle or slope, which faces the direction of travel of the warp yarn materials. The weft yarns are delivered to the surface of the conical aligner by rotatory pulleys operating in conjunction with the rotating drum. The individual weft yarns are each delivered to substantially the same spot on the sloped surface of the conical aligner. They fall down the sloped surface, and are forced, one after the other, down into a tight spacing on the surface of the adhesive coated warp yarns. Fig. 10 shows a perspective view of the application of weft yarns, in a wide spacing manner, to the warp yarns. Once the weft yarns have been applied to the warp yarn material, the adhesive between the yarns must be heated and cooled to form a non-woven fabric. These steps are conducted in the next part of the apparatus as discussed below.

The adhesive heating station 68 consists of a steel or other heat transmitting cylindrical core that is positioned interiorly of the belt immediately downstream from the weft yarn material application station 66' and forms an axial extension of the rigid cylindrical ring 162' in the weft yarn application station. Resistive heat elements are circumferentially positioned around the steel core with the resistive heat elements connected to an electrical source by wiring 276' as possibly best seen in Fig. 6, which passes through the cylindrical ring support in the weft yarn application station and outwardly of the apparatus through a circular aperture 278' therein so that it can be plugged into an electrical power source in a conventional manner. When an electrical current is applied to the resistive elements, the metal core is heated thereby radiating heat outwardly through the warp yarn material, the adhesive on the warp yarn material, and the overlying layer of weft yarn material. The heat is controlled to sufficiently melt the adhesive to bond the warp and weft yarns together.

As the composite fabric material 131' of bonded warp and weft yarns is moved downstream, it next encounters the cooling or adhesive setting station 70' which, again, includes a steel or other heat conductive cylinder which immediately underlies the belt. A heat transfer system interiorly of the cylinder uses circulating coolant from inlet and outlet tubes, respectively, in a conventional manner to remove heat from the composite fabric material. The coolant transfer tubes (not shown) are connected to the heat transfer system so that a continuous supply of coolant fluid can be circulated through the cooling station to set the adhesive thereby securely bonding the warp and weft yarn material.

As the composite fabric material 131' leaves the cooling station 70' and is moved further downstream, it engages the fabric cutter 132' that is conventional and is mounted on a bracket. The cutter serves to sever the composite fabric material 131' along its length as it is moved along the apparatus.

As the material progresses further downstream after being cut, it is flattened out as the support structure 126' transgresses from a cylindrical configuration to a flat configuration in the flattening station 72'. Accordingly, as the non-woven composite fabric material reaches the drive roller and then passes to the take-up station 76', it has been flattened on the belt and is wrapped around the take-up roll until a desired amount of fabric material has been accumulated. The take-up roller can then be removed from the machine and replaced with another take-up roller to continue the process.

Although the present invention has been described with a certain degree of particularity, it is understood that the present disclosure has been made by way of example, and changes in detail or structure may be made without departing from the scope of the invention as defined in the appended claims.

## Claims

1. An apparatus for forming a non-woven fabric product having substantially perpendicular warp yarns and weft yarns, said apparatus comprising in combination:
- a warp yarn support system (62') including an elongated substantially cylindrical support structure extending along the length of said warp yarns and having a low-friction, substantially cylindrical outer surface;
- an endless belt extending along the length of said warp yarns and movable along the length of said support structure;
- a supply of elongated parallel warp yarns (78') that are positioned side-by-side upon said endless movable belt along the length of said support structure and that have a coating of adhesive at least on their exposed surfaces, preferably only on their exposed surfaces;
- a delivery system for weft yarn including: a drum (130') mounted for rotation about said support structure, about said endless belt and about said warp yarns, power means for rotating said drum about said support structure endless belt and warp yarns, at least one source of supply (206') of said weft yarn mounted on said drum for rotation therewith, and a guide system for delivering said weft yarn from said source of supply of said weft yarn to said adhesive coated outer surface of said warp yarns upon rotation of said drum, such that said weft yarn is wrapped about said warp yarns in substantially perpendicular relationship therewith;
- a driven system that is operatively connected to said endless belt for moving said warp yarns along the length of said support structure and through said weft yarn delivery system;
and being **characterized by**
- a heater (68') for activating said adhesive to bond yarns, between which is said adhesive; and
- a conical alignment guide (200) which is positioned immediately adjacent, preferably downstream, of said drum and immediately adjacent to, and about, said warp yarns, and about which said weft yarn is wound prior to falling down upon, and being wound about, said warp yarns and said coating of adhesive on said exposed surfaces of said warp yarns.

2. The apparatus of claim 1 wherein said conical alignment guide (200) is stationary and has a sloped surface, facing the direction of movement of said warp yarns.

3. The apparatus of claim 2 wherein said conical alignment guide (200) has a sloped surface of about 30 to 60 degrees, preferably about 45 degrees.

4. The apparatus of any one of claims 1-3 wherein said conical alignment guide (200) is a final guide for guiding a rotating weft yarn on to said warp yarns in substantially perpendicular alignment.

5. The apparatus of any one of claims 1- 4 wherein said source of supply (206') of said weft yarn is a spool or cone of a weft yarn.

6. The apparatus of any one of claims 1- 5 wherein said source of supply (206') of said weft yarn is a plurality of spools of weft yarns that are mounted on said drum (130') in circumferentially spaced relationship.

7. The apparatus of claim 6 wherein said drum (130') comprises a hollow ring which surrounds said support structure, which has said plurality of spools (206') of said weft yarns mounted away from said support structure and which has a radial disk that is spaced away, preferably downstream from, said plurality of spools and that surrounds said conical alignment guide, so that said weft yarns extend, preferably downstream, from said plurality of spools to said disk and then vertically to said conical alignment guide.

8. The apparatus of claim 6 or 7 wherein said weft yarns are wrapped about said warp yarns so as to establish 15-55 (40-140) wraps, preferably 15-40 (40-100) wraps, of said weft yarns per cm (per inch) along the length of said warp yarns.

9. The apparatus of claim 8 wherein said warp yarns have a density of 15-55 (40-140) yarns, preferably 15-40 (40-100) yarns, per cm (per inch).

10. The apparatus of any one of claims 1-9 wherein said heater (68') is downstream from said weft yarn delivery system.

11. The apparatus of any one of claims 1-10 wherein a driven take-up system is downstream from said weft yarn delivery system and is operatively connected to said warp yarns for moving said warp yarns along said support structure and through said warp yarn delivery system.

12. The apparatus of any one of claims 1-11 which further comprises a cooler, downstream of said heater, to set said adhesive that bonds weft and warp yarns, between which is said adhesive.

13. The apparatus of any one of claims 1-12 wherein said heater adhesively bonds said wrapped weft yarn to said warp yarns to form a cylindrical fabric and wherein said apparatus further comprises, downstream of said heater, means, preferably a rotary cutter (132'), for a cutting said cylindrical fabric into a flat fabric.

14. The apparatus of any one of claims 1-13 wherein said driven system for said endless belt and said power means for rotating said drum are independently operated and at least one is variably driven such that the angle of wrap of said weft yarn relative to said warp yarns is variable.

15. A method of forming a non-woven product having substantially perpendicular warp yarns and weft yarns, said method including the steps of:
- supplying a plurality of substantially parallel warp yarns (78') having a coating of adhesive at least on one side thereof, preferably only on one side thereof;
- supporting said warp yarns on an endless belt that extends along the length of said warp yarns and that is on a substantially cylindrical support structure (62') which extends along the length of said warp yarns and which has a low-friction, substantially cylindrical outer surface, with said adhesive coating exposed, while moving said endless belt with said warp yarns in side-by-side arrangement along said support structure;
- supplying at least one weft yarn to a conical alignment guide (200), positioned immediately adjacent to, and about, said warp yarns and then wrapping said weft yarn about said conical alignment guide;
- then causing said wrapped weft yarn to fall from said conical alignment guide on to said warp yarns on said endless belt and said support structure so that said weft yarn is in contact with said adhesive on said one surface of said warp yarns and substantially perpendicular to said warp yarns while moving said endless belt with said warp yarns along said support structure;
- heating and thereby activating said adhesive to bond yarns, between which is said adhesive; and then
- collecting said warp and weft yarns with said adhesive having been activated to bond said warp and weft yarns, between which is said adhesive.

16. The method of claim 15 wherein said conical alignment guide (200) is stationary and has a sloped surface, facing the direction of movement of said warp yarns.

17. The method of claim 16 wherein said conical alignment guide (200) has a sloped surface of about 30 to 60 degrees, preferably about 45 degrees.

18. The method of any one of claims 15-17 wherein said conical alignment guide (200) is a final guide for guiding a rotating weft yarn on to said warp yarns in substantially perpendicular alignment.

19. The method of any one of claims 15-18 wherein said weft yarn is supplied as a spool (206') of a weft yarn.

20. The method of any one of claims 15-19 wherein said warp yarns are circumferentially spaced about said support structure when said weft yarn is wrapped about said warp yarns.

21. The method of any one of claims 15-20 wherein said weft yarn is supplied as a plurality of spools (206') of weft yarns that are circumferentially spaced about said warp yarns.

22. The method of claim 21 wherein said weft yarns are wrapped about said warp yarns so as to establish 15-55 (40-140) wraps, preferably 15-40 (40-100) wraps, of said weft yarns per cm (per inch) along the length of said warp yarns.

23. The method of claim 22 wherein said warp yarns have a density of 15-55 (40-140) yarns, preferably 15-40 (40-100) yarns, per cm (per inch).

24. The method of any one of claims 15-23 wherein said adhesive is heated and thereby activated after the step of causing said wrapped weft yarn to fall from said conical alignment guide on to said warp yarns.

25. The method of any one of claims 15-24 wherein said adhesive, after said heating step, is cooled to set said adhesive that bonds weft and warp yarns, between which is said adhesive.

26. The method of any one of claims 15-25 wherein said heating step adhesively bonds said wrapped weft yarn to said warp yarns to form a cylindrical fabric and wherein said cylindrical fabric is cut, preferably rotary cut, downstream of said heating step into a flat fabric before the step of collecting said warp and weft yarns with said adhesive having been activated to bond said warp and weft yarns, between which is said adhesive.

## Patentansprüche

1. Vorrichtung zur Herstellung eines Vliesstoffprodukts mit im wesentlichen rechtwinklig zueinander angeordneten Kettfäden und Schußfäden, die genannte Vorrichtung umfassend eine Kombination aus
- einem Kettgam-Stützsystem (62'), welches eine längliche, im wesentlichen zylindrische Stützkonstruktion einschließt, die sich entlang der Länge der genannten Kettfäden erstreckt und eine reibungsarme, im wesentlichen zylindrische Außenfläche hat;
- einem Endlosband, das sich entlang der Länge der genannten Kettfäden erstreckt und entlang der Länge der genannten Stützkonstruktion beweglich ist;
- eine Zufuhr von länglichen parallelen Kettfäden (78'), die Seite an Seite auf dem genannten endlosen beweglichen Band entlang der Länge der genannten Stützkonstruktion angeordnet sind und die mindestens auf ihren exponierten Flächen, vorzugsweise nur auf ihren exponierten Flächen, mit einer Beschichtung aus Klebstoff versehen sind;
- einem Schußgarn-Zuführungssystem, umfassend eine Trommel (130'), die so angebracht ist, daß sie um die genannte Stützkonstruktion, um das genannte Endlosband und um die genannten Kettfäden gedreht werden kann, Antriebsmittel zur Drehung der genannten Trommel um die genannte Stützkonstruktion, das genannte Endlosband und die genannten Kettfäden, mindestens eine Versorgungsquelle (206') für das genannte Schußgarn, die auf der genannten Trommel zur Drehung damit befestigt ist, und ein Führungssystem zur Zuführung des genannten Schußgarns von der genannten Schußgarn-Versorgungsquelle zu der genannten klebstoffbeschichteten Außenseite der genannten Kettfäden bei Drehung der genannten Trommel, so daß das genannte Schußgarn im wesentlichen rechtwinklig zu den genannten Kettfäden um die genannten Kettfäden gewickelt wird;
- einem angetriebenen System, das ist mit dem genannten Endlosband wirkend verbunden zur Bewegung der genannten Kettfäden entlang der Länge der genannten Stützkonstruktion und durch das genannte Schußgarn-Zuführungssystem;
und **gekennzeichnet, durch**
- eine Heizvorrichtung (68') zur Aktivierung des genannten Klebstoffs zur Verklebung von Fäden, zwischen denen der genannte Klebstoff angeordnet ist; und
- eine konische Ausrichtungsführung (200), die unmittelbar in der Nähe und vorzugsweise in Prozeßrichtung nach der genannten Trommel angeordnet ist und unmittelbar in der Nähe der genannten Kettfäden und um diese herum angeordnet ist und um welche das genannte Schußgarn gewickelt wird, bevor es nach unten auf die genannten Kettfäden und die genannte Klebstoffbeschichtung auf den genannten exponierten Flächen der genannten Kettfäden fällt und um diese gewickelt wird.

2. Vorrichtung gemäß Anspruch 1, bei der die genannte konische Ausrichtungsführung (200) feststehend ist und eine schräg abfallende Fläche hat, die der Bewegungsrichtung der genannten Kettfäden gegenüber angeordnet ist.

3. Vorrichtung gemäß Anspruch 2, bei der die schräg abfallende Fläche der genannten konischen Ausrichtungsführung (200) eine Neigung von etwa 30 bis 60 Grad, vorzugsweise etwa 45 Grad hat.

4. Vorrichtung gemäß einem der Ansprüche 1-3, bei der die genannte konische Ausrichtungsführung (200) eine letzte Führung ist, um einen umlaufenden Schußfaden in im wesentlichen rechtwinkliger Ausrichtung auf die genannten Kettfäden zu führen.

5. Vorrichtung gemäß einem der Ansprüche 1-4, bei der die genannte Schußgarn-Versorgungsquelle (206') eine Spule oder Kone mit einem Schußfaden ist.

6. Vorrichtung gemäß einem der Ansprüche 1-5, bei der die genannte Schußgarn-Versorgungsquelle (206') mehrere Schußfaden-Spulen umfaßt, die auf der genannten Trommel (130') über den Umfang voneinander beabstandet angeordnet sind.

7. Vorrichtung gemäß Anspruch 6, bei der die genannte Trommel (130') einen hohlen Ring umfaßt, welcher die genannte Stützkonstruktion umgibt und an welchem die genannten mehreren Spulen (206') der genannten Schußfäden auf der von der genannten Stützkonstruktion weg weisenden Seite befestigt sind und welcher mit einer radialen Scheibe versehen ist, die in einem Abstand, vorzugsweise in Prozeßrichtung nach den genannten mehreren Spulen angeordnet ist und die die genannte konische Ausrichtungsführung umgibt, so daß sich die genannten Schußfäden vorzugsweise in Prozeßrichtung von den genannten mehreren Spulen zu der genannten Scheibe und dann vertikal zu der genannten Ausrichtungsführung erstrecken.

8. Vorrichtung gemäß Anspruch 6 oder 7, bei der die genannten Schußfäden um die genannten Kettfäden gewickelt werden, um 15-55 (40-140) Umwindungen, vorzugsweise 15-40 (40-100) Umwindungen der genannten Schußfäden pro cm (Zoll) entlang der Länge der genannten Kettfäden zu bilden.

9. Vorrichtung gemäß Anspruch 8, bei der die genannten Kettfäden eine Dichte von 15-55 (40-140) Fäden, vorzugsweise 15-40 (40-100) Fäden pro cm (Zoll) haben.

10. Vorrichtung gemäß einem der Ansprüche 1 bis 9, bei der die genannte Heizvorrichtung (68') in Prozeßrichtung nach dem genannten Schußgarn-Zuführungssystem angeordnet ist.

11. Vorrichtung gemäß einem der Ansprüche 1-10, bei der ein angetriebenes Aufwickelsystem in Prozeßrichtung nach dem genannten Schußgarn-Zuführungssystem angeordnet und wirkend mit den genannten Kettfäden verbunden ist, um die genannten Kettfäden entlang der genannten Stützkonstruktion und durch das genannte Kettgarn-Zuführungssystem zu bewegen.

12. Vorrichtung gemäß einem der Ansprüche 1-11, die weiter eine Kühlvorrichtung in Prozeßrichtung nach der genannten Heizvorrichtung umfaßt, um den genannten Klebstoff erstarren zu lassen, der Schuß- und Kettfäden, zwischen denen sich der genannte Klebstoff befindet, miteinander verklebt.

13. Vorrichtung gemäß einem der Ansprüche 1-12, bei der die genannte Heizvorrichtung das genannte herumgewickelte Schußgarn mit den genannten Kettfäden verklebt, um ein zylindrisches textiles Gebilde zu bilden, wobei die genannte Vorrichtung weiter, in Prozeßrichtung nach der Heizvorrichtung, Mittel umfaßt, vorzugsweise eine Schneidrolle (132'), um das genannte zylindrische textile Gebilde zu einem flachen textilen Gebilde aufzuschneiden.

14. Vorrichtung gemäß einem der Ansprüche 1-13, bei der das genannte angetriebene System für das genannte Endlosband und das genannte Antriebsmittel zur Drehung der genannten Trommel unabhängig betätigt werden und zumindest eins von beiden variabel angetrieben ist, so daß der Umschlingungswinkel des genannten Schußgarns im Verhältnis zu den genannten Kettfäden variabel ist.

15. Verfahren zur Herstellung eines Vliesprodukts mit im wesentlichen rechtwinklig zueinander angeordneten Kettfäden und Schußfäden, das genannte Verfahren umfassend die Schritte:
- Zuführen von mehreren im wesentlichen parallelen Kettfäden (78') mit einer Klebstoffbeschichtung auf mindestens einer Seite, vorzugsweise nur auf einer Seite derselben;
- Stützen der genannten Kettfäden auf einem Endlosband, das sich entlang der Länge der genannten Kettfäden erstreckt und das sich auf einer im wesentlichen zylindrischen Stützkonstruktion (62') befindet, welche sich entlang der Länge der genannten Kettfäden erstreckt, und das eine reibungsarme, im wesentlichen zylindrische Außenfläche hat, wobei die genannte Klebstoffbeschichtung exponiert ist, während das genannte Endlosband mit den genannten seitlich nebeneinander angeordneten Kettfäden entlang der genannten Stützkonstruktion bewegt wird;
- Zuführen von mindestens einem Schußfaden zu einer konischen Ausrichtungsführung (200), die unmittelbar in der Nähe der genannten Kettfäden und um diese herum angeordnet ist, und anschließendes Wickeln des genannten Schußfadens um die genannte konische Ausrichtungsführung;
- Fallenlassen des herumgewickelten Schußfadens von der genannten konischen Ausrichtungsführung auf die genannten Kettfäden auf dem genannten Endlosband und der genannten Stützkonstruktion, so daß sich der genannte Schußfaden im Kontakt mit dem genannten Klebstoff auf der genannten einen Fläche der genannten Kettfäden und im wesentlichen rechtwinklig zu den genannten Kettfäden befindet, während das genannte Endlosband mit den genannten Kettfäden entlang der genannten Stützkonstruktion bewegt wird;
- Erhitzen und damit Aktivieren des genannten Klebstoffs zur Verklebung von Fäden, zwischen denen sich der genannte Klebstoff befindet; und anschließendes
- Aufsammeln der genannten Kett- und Schußfäden, nachdem der genannte Klebstoff aktiviert wurde, um die genannten Kett- und Schußfäden, zwischen denen sich der genannte Klebstoff befindet, zu verkleben.

16. Verfahren gemäß Anspruch 15, bei dem die genannte konische Ausrichtungsführung (200) feststehend ist und eine schräg abfallende Fläche hat, die der Bewegungsrichtung der genannten Kettfäden gegenüber angeordnet ist.

17. Verfahren gemäß Anspruch 16, bei dem die schräg abfallende Fläche der genannten konischen Ausrichtungsführung (200) eine Neigung von etwa 30 bis 60 Grad, vorzugsweise etwa 45 Grad hat.

18. Verfahren gemäß einem der Ansprüche 15-17, bei dem die genannte konische Ausrichtungsführung (200) eine letzte Führung ist, um einen umlaufenden Schußfaden in im wesentlichen rechtwinkliger Ausrichtung auf die genannten Kettfäden zu führen.

19. Verfahren gemäß einem der Ansprüche 15-18, bei dem der genannte Schußfaden in Form einer Spule (206') mit einem Schußfaden zugeführt wird.

20. Verfahren gemäß einem der Ansprüche 15-19, bei dem die genannten Kettfäden über den Umfang voneinander beabstandet um die genannte Stützkonstruktion angeordnet sind, wenn der genannte Schußfaden um die genannten Kettfäden gewickelt wird.

21. Verfahren gemäß einem der Ansprüche 15-20, bei dem das genannte Schußgarn von mehreren Spulen (206') mit Schußfäden zugeführt wird, die im Umfang voneinander beabstandet um die genannten Kettfäden angeordnet sind.

22. Verfahren gemäß Anspruch 21, bei dem die genannten Schußfäden um die genannten Kettfäden gewickelt werden, um 15-55 (40-140) Umwindungen, vorzugsweise 15-40 (40-100) Umwindungen der genannten Schußfäden pro cm (Zoll) entlang der Länge der genannten Kettfäden zu bilden.

23. Verfahren gemäß Anspruch 22, bei dem die genannten Kettfäden eine Dichte von 15-55 (40-140) Fäden, vorzugsweise 15-40 (40-100) Fäden pro cm (Zoll) haben.

24. Verfahren gemäß einem der Ansprüche 15-23, bei dem der genannte Klebstoff nach dem Schritt des Fallenlassens des genannten herumgewickelten Schußgarns von der genannten konischen Ausrichtungsführung auf die genannten Kettfäden erhitzt und damit aktiviert wird.

25. Verfahren gemäß einem der Ansprüche 15-24, bei dem der genannte Klebstoff nach dem genannten Erhitzungsschritt abgekühlt wird, um den genannten Klebstoff erstarren zu lassen, der Schuß- und Kettfäden, zwischen denen sich der genannte Klebstoff befindet, miteinander verklebt.

26. Verfahren gemäß einem der Ansprüche 15-25, bei dem in dem genannten Erhitzungsschritt das genannte herumgewickelte Schußgarn mit den genannten Kettfäden verklebt wird, um ein zylindrisches textiles Gebilde zu bilden, und bei dem das genannte zylindrische textile Gebilde im Prozeßablauf nach dem genannten Erhitzungsschritt, vorzugsweise rollend, zu einem flachen textilen Gebilde aufgeschnitten wird, bevor die genannten Kett- und Schußfäden, die durch Aktivieren des zwischen ihnen befindlichen Klebstoffs miteinander verklebt wurden, aufgesammelt werden.

## Revendications

1. Dispositif pour former un produit d'étoffe non-tissée comportant des fils de chaîne et des fils de trame essentiellement perpendiculaires, ledit dispositif comprenant, de façon combinée:
- un système de support de fils de chaîne (62') comprenant une structure de support essentiellement cylindrique, de forme allongée, s'étendant sur la longueur desdits fils de chaîne et ayant une surface extérieure essentiellement cylindrique, de faible coefficient de friction ;
- une bande sans fin s'étendant sur la longueur desdits fils de chaîne et pouvant se déplacer sur la longueur de ladite structure de support ;
- une source d'alimentation en fils de chaîne parallèles allongés (78') qui sont placés côte à côte sur ladite bande sans fin mobile sur la longueur de ladite structure de support et qui présentent un revêtement d'adhésif au moins sur leurs surfaces exposées, de préférence seulement sur leurs surfaces exposées ;
- un système de distribution pour le fil de trame comprenant : un cylindre (130') monté à rotation autour de ladite structure de support, autour de ladite bande sans fin et autour desdits fils de chaîne, des moyens d'énergie pour faire tourner ledit cylindre autour de ladite structure de support de ladite bande sans fin et des fils de chaîne, au moins une source d'alimentation (206') dudit fil de trame montée sur ledit cylindre pour tourner avec lui, et un système de guidage pour délivrer ledit fil de trame à partir de ladite source d'alimentation dudit fil de trame à ladite surface extérieure recouverte d'adhésif desdits fils de chaîne lors de la rotation dudit cylindre, de telle sorte que ledit fil de trame s'enroule autour desdits fils de chaîne suivant une relation essentiellement perpendiculaire par rapport à eux ;
- un système commandé qui est connecté fonctionnellement à ladite bande sans fin pour déplacer lesdits fils de chaîne sur la longueur de ladite structure de support et à travers ledit système de distribution de fil de trame ; et étant **caractérisé par** :
- un élément chauffant (68') servant à activer ledit adhésif pour lier les fils, entre lequel se trouve ledit adhésif ; et
- un guide d'alignement conique (200) qui est positionné de façon immédiatement adjacente, de préférence en aval, dudit cylindre et de façon immédiatement adjacente aux, et autour des, fils de chaîne, et autour duquel ledit fil de trame est enroulé avant de tomber sur lesdits, et d'être enroulé autour desdits, fils de chaîne et dudit revêtement d'adhésif placé sur lesdites surfaces exposées desdits fils de chaîne.

2. Dispositif selon la revendication 1 dans lequel le guide d'alignement conique (200) est fixe et présente une surface inclinée, faisant face à la direction de déplacement desdits fils de chaîne.

3. Dispositif selon la revendication 2 dans lequel ledit guide d'alignement conique (200) présente une surface inclinée de 30 à 60 degrés environ, de préférence de 45 degrés environ.

4. Dispositif selon l'une quelconque des revendications 1 à 3 dans lequel ledit guide d'alignement conique (200) est un guide final servant à guider un fil de trame rotatif sur lesdits fils de chaîne dans un alignement essentiellement perpendiculaire.

5. Dispositif selon l'une quelconque des revendications 1 à 4 dans lequel ladite source d'alimentation (206') en dit fil de trame est une canette ou un cône de fil de trame.

6. Dispositif selon l'une quelconque des revendications 1 à 5 dans lequel ladite source d'alimentation (206') en dit fil de trame est une pluralité de canettes de fils de trame qui sont fixées sur ledit cylindre (130') suivant une relation espacée circonférentiellement.

7. Dispositif selon la revendication 6 dans lequel ledit cylindre (130') comprend une bague creuse qui entoure ladite structure de support, laquelle présente ladite pluralité de canettes (206') desdits fils de trame fixée à distance de ladite structure de support et laquelle possède un disque radial qui est placé à distance, de préférence en aval de ladite pluralité de canettes et qui entoure ledit guide d'alignement conique, de sorte que lesdits fils de trame s'étendent, de préférence en aval, à partir de ladite pluralité de canettes vers ledit disque et ensuite verticalement vers ledit guide d'alignement conique.

8. Dispositif selon la revendication 6 ou 7 dans lequel lesdits fils de trame sont enroulés autour desdits fils de chaîne de façon à établir 15 à 55 (40 à 140) enroulements, de préférence 15 à 40 (40 à 100) enroulements, desdits fils de trame par cm (par pouce) sur la longueur desdits fils de chaîne.

9. Dispositif selon la revendication 8 dans lequel lesdits fils de chaîne ont une densité de 15 à 55 (40 à 140) fils, de préférence 15 à 40 (40 à 100) fils par cm (par pouce).

10. Dispositif selon l'une quelconque des revendications 1 à 9 dans lequel ledit élément chauffant (68') se trouve en aval dudit système de distribution de fil de trame.

11. Dispositif selon l'une quelconque des revendications 1 à 10 dans lequel un système d'enroulement commandé est placé en aval dudit système de distribution de fil de trame et est connecté fonctionnellement aux dits fils de chaîne pour déplacer lesdits fils de chaîne le long de ladite structure de support et à travers ledit système de distribution de fil de chaîne.

12. Dispositif selon l'une quelconque dés revendications 1 à 11 qui comprend, de plus, un refroidisseur situé en aval dudit élément chauffant, pour stabiliser ledit adhésif qui lie les fils de trame et les fils de chaîne, entre lesquels se trouve ledit adhésif.

13. Dispositif selon l'une quelconque des revendications 1 à 12 dans lequel ledit élément chauffant lie de façon adhésive ledit fil de trame enroulé aux dits fils de chaîne pour former un tissu cylindrique et dans lequel ledit dispositif comprend, de plus, en aval dudit élément chauffant, des moyens, de préférence, un dispositif de coupe rotatif (132'), pour couper ledit tissu cylindrique en un tissu plat.

14. Dispositif selon l'une quelconque des revendications 1 à 13 dans lequel ledit système commandé destiné à ladite bande sans fin et lesdits moyens d'énergie servant à faire tourner ledit cylindre sont actionnés de façon indépendante et au moins l'un est commandé de façon variable de telle sorte que l'angle d'enroulement dudit fil de trame par rapport audit fils de chaîne soit variable.

15. Procédé de formation d'un produit non-tissé comportant des fils de chaîne et des fils de trame essentiellement perpendiculaires, ledit procédé incluant les étapes consistant à :
- fournir une pluralité de fils de chaîne essentiellement parallèles (78') ayant un revêtement d'adhésif au moins sur l'un de ses côtés, de préférence, sur un de ses côtés seulement ;
- supporter lesdits fils de chaîne sur une bande sans fin qui s'étend sur la longueur desdits fils de chaîne et qui se trouve sur une structure de support essentiellement cylindrique (62') qui s'étend sur la longueur desdits fils de chaîne et qui possède une surface extérieure essentiellement cylindrique ayant un faible coefficient de friction, ledit revêtement adhésif étant exposé, tout en déplaçant ladite bande sans fin avec lesdits fils de chaîne dans un agencement côte à côte le long de ladite structure de support ;
- fournir au moins un fil de trame à un guide d'alignement conique (200), positionné de façon immédiatement adjacente aux dits, et autour desdits, fils de chaîne et enrouler ensuite ledit fil de trame autour dudit guide d'alignement conique ;
- entraîner ensuite ledit fil de trame enroulé à tomber dudit guide d'alignement conique sur lesdits fils de chaîne sur ladite bande sans fin et ladite structure de support de façon que ledit fil de trame soit en contact avec ledit adhésif sur ladite surface desdits fils de chaîne et soit essentiellement perpendiculaire aux dits fils de chaîne tout en déplaçant ladite bande sans fin avec lesdits fils de chaîne le long de ladite structure de support ;
- chauffer et, de ce fait, activer ledit adhésif pour lier les fils, entre lesquels se trouve ledit adhésif ; et ensuite
- assembler lesdits fils de chaîne et de trame avec ledit adhésif qui a été activé pour lier lesdits fils de chaîne et de trame, entre lesquels se trouve ledit adhésif.

16. Procédé selon la revendication 15 dans lequel ledit guide d'alignement conique (200) est fixe et présente une surface inclinée tournée vers la direction de déplacement desdits fils de chaîne.

17. Procédé selon la revendication 16 dans lequel ledit guide d'alignement conique (200) présente une surface inclinée de 30 à 60 degrés environ, de préférence de 45 degrés environ.

18. Procédé selon l'une quelconque des revendications 15 à 17 dans lequel ledit guide d'alignement conique (200) est un guide final pour guider un fil de trame tournant sur lesdits fils de chaîne suivant un alignement essentiellement perpendiculaire.

19. Procédé selon l'une quelconque des revendications 15 à 18 dans lequel ledit fil de trame est fourni sous forme d'une canette (206') de fil de trame.

20. Procédé selon l'une quelconque des revendications 15 à 19 dans lequel lesdits fils de chaîne sont espacés de façon circonférentielle autour de ladite structure de support lorsque ledit fil de trame est enroulé autour desdits fils de chaîne.

21. Procédé selon l'une quelconque des revendications 15 à 20 dans lequel ledit fil de trame est fourni sous la forme d'une pluralité de canettes (206') de fils de trame qui sont espacées de façon circonférentielle autour desdits fils de chaîne.

22. Procédé selon la revendication 21 dans lequel lesdits fils de trame sont enroulés autour desdits fils de chaîne de façon à établir 15 à 55 (40 à 140) enroulements, de préférence 15 à 40 (40 à 100) enroulements, desdits fils de trame par cm (par pouce) sur la longueur desdits fils de chaîne.

23. Procédé selon la revendication 22 dans lequel lesdits fils de chaîne présentent une densité de 15 à 55 (40 à 140) fils, de préférence, 15 à 40 (40 à 100) fils par cm, (par pouce).

24. Procédé selon l'une quelconque des revendications 15 à 23 dans lequel ledit adhésif est chauffé et, de ce fait, est activé après l'étape qui consiste à entraîner ledit fil de trame enroulé à tomber dudit guide d'alignement conique sur lesdits fils de chaîne.

25. Procédé selon l'une quelconque des revendications 15 à 24 dans lequel ledit adhésif, après ladite étape de chauffage, est refroidi pour stabiliser ledit adhésif qui lie les fils de trame et de chaîne entre lesquels se trouve ledit adhésif.

26. Procédé selon l'une quelconque des revendications 15 à 25 dans lequel ladite étape de chauffage lie de façon adhésive ledit fil de trame enroulé aux dits fils de chaîne pour former un tissu cylindrique et dans lequel ledit tissu cylindrique est coupé, de préférence par coupe rotative, en aval de ladite étape de chauffage, sous la forme d'un tissu plat avant l'étape consistant à assembler lesdits fils de chaîne et de trame avec ledit adhésif qui a été activé pour lier lesdits fils de chaîne et de trame entre lesquels se trouve ledit adhésif.
